# EUROPEAN PATENT APPLICATION

(11) **EP 4 445 993 A1**
(43) Date of publication of application: **16.10.2024**
(21) Application number: 22903932.6
(22) Date of filing: 01.11.2022
(51) Int. Cl.: B01D 61/14, C02F 1/44, C02F 3/12

(54) **ORGANIC WASTE WATER TREATMENT DEVICE AND OPERATION METHOD FOR ORGANIC WASTE WATER TREATMENT DEVICE**

(30) Priority: 07.12.2021 JP 2021198517
(71) Applicant: KUBOTA CORPORATION, Osaka-shi, Osaka 556-8601 (JP)
(72) Inventor: YATSUGI Soichiro, Amagasaki-shi, Hyogo 661-8567 (JP); NAGAE Shinya, Amagasaki-shi, Hyogo 661-8567 (JP)
(74) Representative: Betten & Resch
(86) International application number: PCT/JP2022/040878
(87) International publication number: WO 2023/106000

(57) **Abstract**

Provided is an organic wastewater treatment apparatus that can inhibit an increase in nitrate nitrogen concentration in an anoxic tank while avoiding membrane clogging in a membrane separator, even with an increased volume of sludge returned from an aerobic tank to the anoxic tank.

The organic wastewater treatment apparatus for biologically treating nitrogen-containing organic wastewater in activated sludge includes: a biological treatment tank at least including an anoxic tank and an aerobic tank, the aerobic tank having a membrane separator immersed in activated sludge therein, the membrane separator being configured to repeat a filtration operation and a filtration pause; a sludge return path configured to return activated sludge from the aerobic tank to the anoxic tank; an air release pipe provided to the aerobic tank; and a switching mechanism configured to switch between supplying air to an aerator provided to the membrane separator and supplying air to the air release pipe. The apparatus is configured to, based on a DO value of the aerobic tank, supply air selectively either to the air release pipe or to the aerator via the switching mechanism during a filtration pause of the membrane separator.

## Description

### Technical Field

The present invention relates to an organic wastewater treatment apparatus and a method for operating an organic wastewater treatment apparatus.

### Background Art

Patent Literature 1 proposes an organic wastewater treatment apparatus that can efficiently perform biological treatment according to properties of nitrogen-containing organic wastewater.

The organic wastewater treatment apparatus includes: a biological treatment tank in which a plurality of biological treatment units is connected in series, each of the biological treatment units including a pair of an anoxic tank and an aerobic tank located upstream and downstream, respectively, along a flow of organic wastewater, the aerobic tank having a membrane separator immersed in activated sludge therein; a sludge return path configured to return activated sludge from the aerobic tank located most downstream to the anoxic tank located most upstream; a raw water supply path configured to divide and supply the organic wastewater between the anoxic tanks of the respective biological treatment units; and a treated water discharge path configured to discharge permeate liquid as treated water from the membrane separator of each of the biological treatment units.

The organic wastewater treatment apparatus further includes: a measurement device configured to measure at least one of an inflow volume of the organic wastewater, a tank water level, a transmembrane pressure difference of each of the membrane separators, a T-N concentration (total nitrogen concentration) of the treated water, an NO₃-N concentration (nitrate nitrogen concentration) of the treated water, and an NH₄-N concentration (ammonia nitrogen concentration) of the treated water; and a controller configured to, using measurements from the measurement device as an indicator and for each of the biological treatment units, determine whether to stop the membrane separator that is in operation or to start the membrane separator that is out of operation.

Patent Literature 2 proposes a cleaning airflow control system that can more appropriately determine maintenance cycles while reducing the cleaning airflow.

The cleaning airflow control system includes: a representative basin pressure gauge installed in a representative basin into which air is supplied at a rated airflow rate, the representative basin pressure gauge being configured to measure a transmembrane pressure difference of a representative basin separation membrane unit configured to filter water to be treated flowing into the representative basin; a target value setting unit installed in a controlled basin into which air is supplied at a predetermined airflow rate less than the rated airflow rate, the target value setting unit being configured to set a target value of a transmembrane pressure difference or a membrane filtration resistance of the controlled basin based on an upper limit of a transmembrane pressure difference or a membrane filtration resistance of a controlled basin separation membrane unit configured to filter water to be treated similar to the water to be treated flowing into the representative basin and on information about changes over time of a membrane filtration resistance, calculated based on the transmembrane pressure difference of the representative basin separation membrane unit, or of the transmembrane pressure difference of the representative basin separation membrane unit; an airflow control unit configured to control airflow supplied to the controlled basin based on the target value.

### Citation List

### Patent Literature

Patent Literature 1: Japanese Unexamined Patent Application Publication No. 2018-176016
Patent Literature 2: Japanese Unexamined Patent Application Publication No. 2020-199475

### Summary of Invention

### Technical Problem

In the organic wastewater treatment apparatus disclosed in Patent Literature 1, the actual residence time of the water to be treated in the anoxic tank is shorter than that of a typical membrane bio reactor (MBR). Thus, due to the dissolved oxygen (hereinafter referred to as the "DO") brought from the aerobic tank, the substantially anoxic residence time of the water to be treated in the anoxic tank is reduced. This hinders the progress of denitrification treatment in the anoxic tank, with a likely result of an increase in nitrate nitrogen concentration in treated water.

For example, for an organic wastewater treatment apparatus with two biological treatment units, the actual residence time of the water to be treated in the anoxic tank is reduced to half that of a typical MBR, and for an organic wastewater treatment apparatus with four biological treatment units, this actual residence time is reduced even to a quarter that of a typical MBR.

Therefore, it is necessary to reduce the dissolved oxygen concentration (hereinafter referred to as the "DO value") in the water to be treated in the aerobic tank. For an organic wastewater treatment apparatus with a low inflow load, however, the DO value may not decrease to an ideal concentration of about 1.0 mg/L unless not only an airflow from an auxiliary air diffuser supplying air to the aerobic tank but also a membrane cleaning airflow from an aerator provided to a membrane separator are reduced.

Even for a standard MBR with a single anoxic tank and a single aerobic tank having a membrane separator immersed in activated sludge therein, a similar situation may occur if the volume of sludge returned through a sludge return path is increased.

Typically, cleaning airflow control systems, including the one disclosed in Patent Literature 2 which automatically adjusts the cleaning airflow based on information about changes over time of the membrane filtration resistance, set the membrane cleaning airflow at a constant airflow rate or based on the membrane filtration resistance, independently of the DO value of the aerobic tank.

Hence, taking into account an increase in the DO value, one possible control method will be to forcibly decrease the cleaning airflow in response to the DO value of the water to be treated in the aerobic tank reaching an upper limit, to thereby inhibit such an increase in the DO value. However, reducing the membrane cleaning airflow based only on the DO value may lead to a sudden increase in the membrane fouling rate.

It is an object of the present invention to provide an organic wastewater treatment apparatus and a method for operating an organic wastewater treatment apparatus that can inhibit an increase in nitrate nitrogen concentration in an anoxic tank while avoiding membrane clogging in a membrane separator, even with an increased volume of sludge returned from an aerobic tank to the anoxic tank.

### Solution to Problem

To achieve the above object, an organic wastewater treatment apparatus for biologically treating nitrogen-containing organic wastewater in activated sludge is provided in accordance with the present invention. As a first feature of the apparatus, the apparatus comprises: a biological treatment tank at least including an anoxic tank and an aerobic tank, the aerobic tank having a membrane separator immersed in activated sludge therein, the membrane separator being configured to repeat a filtration operation and a filtration pause; a sludge return path configured to return activated sludge from the aerobic tank to the anoxic tank; an air release pipe provided to the aerobic tank; and a switching mechanism configured to switch between supplying air to an aerator provided to the membrane separator and supplying air to the air release pipe. In the first feature, the apparatus is configured to, based on a DO value of the aerobic tank, supply air selectively either to the air release pipe or to the aerator via the switching mechanism during a filtration pause of the membrane separator.

The membrane separator repeats a membrane filtration operation and a filtration pause at predetermined time intervals, where the membrane filtration operation is to obtain treated water through membrane filtration performed while fine air bubbles are released from the aerator, and during the filtration pause, the membrane filtration is stopped while maintaining the release of fine air bubbles from the aerator to purify the membrane surface by the upward flow of the water to be treated that is created by the diffused air. At this time, the fine air bubbles released from the aerator cause an increase in the DO value.

Hence, when the DO value in the aerobic tank is high and the nitrate nitrogen concentration in the water to be treated is likely to increase due to the stagnant progress of denitrification treatment in the anoxic tank, aeration by the aerator is stopped and air is released from the air release pipe during a filtration pause of the membrane separator to inhibit an increase in the DO value. The air released from the air release pipe forms a large local mass in the aerobic tank and quickly rises in the liquid and thus does not cause an increase in the DO value, unlike the fine air bubbles released from the aerator. Since the membrane filtration is not performed during the filtration pause, no fouling substances will adhere to the membrane surface.

In response to the DO value in the aerobic tank being reduced to facilitate the denitrification treatment in the anoxic tank, the air release from the air release pipe is switched to the diffusion by the aerator during a filtration pause of the membrane separator, allowing the membrane surface to be purified by the upward flow of the water to be treated created by the diffused air.

In addition to the first feature above, the organic wastewater treatment apparatus has a second feature that the air release pipe is located upstream of a flow of the organic wastewater or at a position spaced apart from the sludge return path.

Care should be taken to ensure that air released from the air release pipe is not returned to the anoxic tank via the sludge return path. Hence, the air release pipe is preferably located upstream of the organic wastewater flow along which the activated sludge flows in from the anoxic tank, or at a position spaced apart from the sludge return path.

In addition to the first feature above, the organic wastewater treatment apparatus has a third feature that a discharge pressure of the air release pipe is adjusted to be equivalent to a discharge pressure of the aerator.

If the discharge pressures of the air release pipe and the aerator are different, the airflow to other lines may vary greatly depending on which the air supply is switched to during a filtration pause, making a proper operation impossible. However, adjusting the discharge pressure of the air release pipe to be equivalent to that of the aerator ensures stable airflow conditions for other lines. Thus, for example, it is necessary to provide a restriction mechanism to the air release pipe or interpose a constant flow valve that can supply a constant flow rate even under pressure fluctuations, to ensure that the discharge pressure of the air release pipe is equivalent to that of the aerator.

In addition to the first feature above, the organic wastewater treatment apparatus has a fourth feature that the biological treatment tank includes a plurality of biological treatment units connected in series, each of the biological treatment units including a pair of the anoxic tank and the aerobic tank, the sludge return path is configured to return activated sludge from the aerobic tank located most downstream to the anoxic tank located most upstream, the organic wastewater treatment apparatus is configured to divide and supply the organic wastewater between the anoxic tanks of the respective biological treatment units and repeat denitrification treatment in the anoxic tanks and nitrification treatment in the aerobic tanks to biologically treat the organic wastewater, and the organic wastewater treatment apparatus is configured to, based on a DO value of one of the aerobic tanks, supply air selectively either to the air release pipe or to the aerator via a switching mechanism provided to a membrane separator provided to the one aerobic tank during a filtration pause of the membrane separator.

By employing the above biological treatment tank, the effective circulation ratio for the sludge returned via the sludge return path can be set to a large value, providing a high nitrogen removal rate. In response to an increase in the DO value, air is supplied selectively either to the air release pipe or to the aerator via the switching mechanism during a filtration pause of the membrane separator, which allows for reducing the DO value while inhibiting the membrane fouling in the membrane separator.

A method for operating an organic wastewater treatment apparatus is also provided in accordance with the present invention. The method is for operating the organic wastewater treatment apparatus with any of the first to fourth features described above and comprises: in response to a DO value of the aerobic tank exceeding a predetermined threshold, switching from supplying air to the aerator to supplying air to the air release pipe via the switching mechanism during a filtration pause of the membrane separator.

### Advantageous Effects of Invention

As described above, the present invention can provide an organic wastewater treatment apparatus and a method for operating an organic wastewater treatment apparatus that can inhibit an increase in nitrate nitrogen concentration in an anoxic tank while avoiding membrane clogging in a membrane separator, even with an increased volume of sludge returned from an aerobic tank to the anoxic tank.

### Brief Description of Drawings

FIG 1A illustrates a plan view of an organic wastewater treatment apparatus in accordance with the present invention.
FIG 1B illustrates a cross-sectional view of major parts of the organic wastewater treatment apparatus in accordance with the present invention.
FIG 2 illustrates a membrane element of a membrane separator.
FIG 3 illustrates a cross-sectional view of major parts of the organic wastewater treatment apparatus in accordance with the present invention, illustrating another embodiment of the present invention.

### Description of Embodiments

Embodiments of an organic wastewater treatment apparatus and a method for operating an organic wastewater treatment apparatus in accordance with the present invention are now described below.

### [First Embodiment]

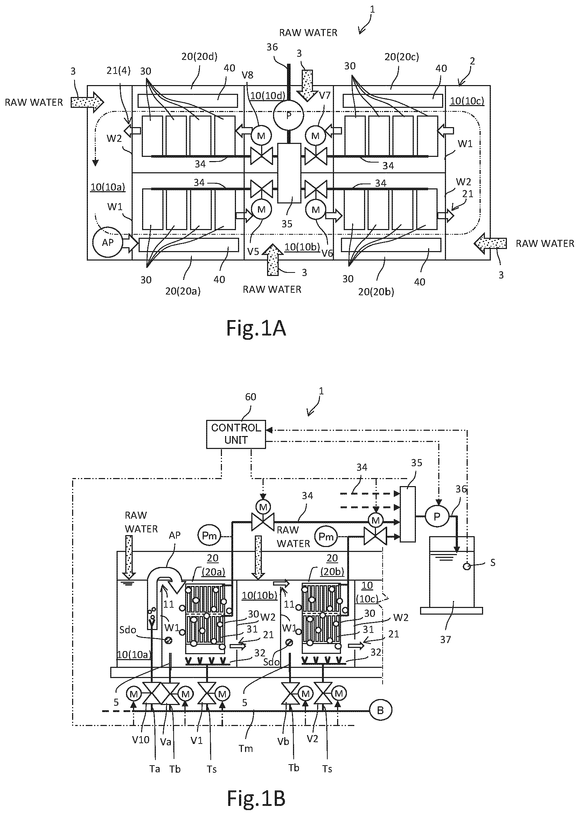

FIGS. 1A and 1B illustrate a first embodiment of the organic wastewater treatment apparatus and the method for operating an organic wastewater treatment apparatus.

The organic wastewater treatment apparatus 1 is a water treatment apparatus for biologically treating nitrogen-containing organic wastewater, which is raw water, as water to be treated in activated sludge to obtain treated water. The organic wastewater treatment apparatus 1 includes a biological treatment tank 2, in which each pair of an anoxic tank 10 and an aerobic tank 20 forms a biological treatment unit, and multiple biological treatment units (four pairs in this embodiment) are arranged in series and endlessly along a flow of the organic wastewater.

A single biological treatment tank 2 may be partitioned into multiple sections to form multiple biological treatment units. Alternatively, the biological treatment tank 2 may be configured with individual anoxic tanks 10 and aerobic tanks 20 arranged in multiple pairs along a flow of the water to be treated.

Still alternatively, the biological treatment tank 2 may be configured in a linear fashion, and a separate water channel or pipeline may be provided as a sludge return path for returning activated sludge including the water to be treated from the most downstream aerobic tank 20 to the most upstream anoxic tank 10.

The organic wastewater, or the raw water, is supplied in substantially equally divided amounts to the anoxic tanks 10 via a raw water supply path 3. The organic wastewater undergoes anaerobic denitrification treatment in each anoxic tank 10 before flowing into the corresponding downstream aerobic tank 20 to undergo aerobic treatment therein. A membrane separator 30 is immersed in each aerobic tank 20, and an auxiliary air diffuser 40 for the aerobic treatment is installed near the membrane separator 30.

An air lift pump AP is installed in the most upstream anoxic tank 10 (10a), and air bubbles supplied from a blower B through a valve V10 generate an upward flow in the air lift pipe, by which the water to be treated is sent to the downstream aerobic tank 20 (20a) together with the activated sludge. The water to be treated then naturally flows down through the anoxic tank 10 (10b), the aerobic tank 20 (20b), the anoxic tank 10 (10c), the aerobic tank 20 (20c), the anoxic tank 10 (10d), and the aerobic tank 20 (20d) in this order. Since the air lift pump AP is provided in the anoxic tank 10 (10a), the dissolved oxygen DO in the anoxic tank 10 does not increase compared to if the air lift pump AP is provided in the aerobic tank 20 to send the water to the anoxic tank 10.

In this embodiment, four pairs of biological treatment units are arranged endlessly along the flow of the water to be treated. The most downstream aerobic tank 20 (20d) and the most upstream anoxic tank 10 (10a) are adjacent to each other with a dividing wall therebetween, and a sludge return path 4 for returning the activated sludge, together with the water to be treated, from the most downstream aerobic tank 20 (20d) to the most upstream anoxic tank 10 (10a) is formed in a portion of the dividing wall.

A dividing wall W1 is formed between the anoxic tank 10 and the aerobic tank 20. The dividing wall W1 includes a cutout 11 (see FIG 1B) in a portion of its upper end to allow the water to be treated including the activated sludge to overflow from the anoxic tank 10 into the aerobic tank 20.

A dividing wall W2 is formed between the aerobic tank 20 and the anoxic tank 10. The dividing wall W2 includes, at a position corresponding to the vicinity of the bottom of the membrane separator 30 in the vertical direction, an outflow port 21 for the water to be treated including the activated sludge. The upper end of the opening defining the outflow port 21 is submerged and located at or below 30 cm from the water surface of the aerobic tank 20. The outflow rate of the activated sludge from the outflow port 21 is set at 0.5 msec or less. The outflow port 21 formed in the most downstream aerobic tank 20 (20d) serves as the sludge return path 4 described above. The dashed two-dotted arrow in FIG 1A indicates that the activated sludge flows through the biological treatment unit units, forming a circulating flow.

The membrane separator 30 includes multiple membrane elements 31 and an aerator 32 installed below the membrane elements 31 (see FIG 1B). The multiple membrane elements 31 are housed in a casing in a regularly spaced, two-tier arrangement such that each membrane surface is oriented upright.

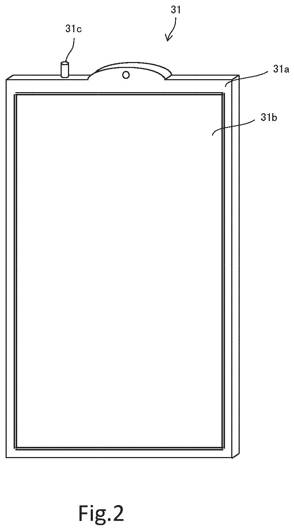

As shown in FIG 2, the membrane element 31 is configured with a resin membrane support 31a with a water collecting pipe 31c at the top thereof and a separation membrane 31b on both front and back sides thereof. In this embodiment, the separation membrane 31b is a microfiltration membrane with a nominal pore size of about 0.4 µm that includes a porous organic polymer membrane on a nonwoven fabric surface.

The type of the separation membrane 31b and the membrane element 31 are not limited to those described above, and any type of separation membrane and any form of membrane element (hollow fiber membrane elements, tubular membrane elements, monolith membrane elements, etc.) may be used.

The treated water that has permeated the separation membrane 3 1b flows along a groove formed in the membrane support 31a into the water collecting pipe 31c. Then, as shown in FIGS. 1A and 1B, the treated water flows from the water collecting pipe 31c through a corresponding header pipe 34 into an air separation tank 35 and is then collected into a treated water tank 37 through a liquid transport pipe 36 connected to the air separation tank 35.

The header pipes 34 are provided with respective valves V5, V6, V7, V8 for flow rate adjustment, and the liquid transport pipe 36 is provided with a suction pump P. The volume of permeate water from each membrane separator 30 is adjusted through pressure adjustment with the suction pump P and opening control with the valves V5, V6, V7, V8.

In order to detect transmembrane pressure differences of the respective membrane separators 30, pressure sensors Pm are provided upstream of the respective valves V5, V6, V7, V8 of the respective header pipes 34. In the figures, reference sign M denotes a motor for adjusting the opening of the corresponding valve. The path along which the treated water flows from the water collecting pipe 31c through the corresponding header pipe 34 into the air separation tank 35 and is then collected into the treated water tank 37 through the liquid transport pipe 36 connected to the air separation tank 35 defines a treated water discharge path.

A main blow pipe Tm is connected to the blower B, and four first sub-blow pipes Ts are branched off of the main blow pipe Tm. The aerators 32 are connected to the respective first sub-blow pipe Ts. The first sub-blow pipes Ts are provided with respective valves V1, V2 ... for flow rate regulation corresponding to the membrane separators 30 installed in the respective aerobic tanks 20, allowing for control of the aeration volume and the stopping and starting of the aeration.

In addition, a single second sub-blow pipe Ta is branched off of the main blow pipe Tm, and lifting air is supplied via a valve V10 provided to the second sub-blow pipe Ta.

Furthermore, four third sub-blow pipes Tb are branched off of the main blow pipe Tm, and air release pipes 5 installed in the respective aerobic tanks 20 are connected to the respective third sub-blow pipes Tb. The third sub-blow pipes Tb are provided with respective valves Va, Vb, ... for flow rate regulation, allowing for control of the stopping and starting of air release.

The water to be treated is aerated by the auxiliary air diffuser 40 together with the activated sludge in the aerobic tank 20, whereby organic substances are decomposed and ammonia nitrogen is nitrified to nitrate nitrogen, and a portion of the water to be treated undergoes solid-liquid separation by the membrane separator 30 into the treated water. The water to be treated that has been nitrified in the aerobic tank 20 flows, together with the activated sludge, into the adjacent downstream anoxic tank 10, where the water to be treated undergoes denitrification treatment of reducing the nitrate nitrogen into nitrogen gas to be removed.

Assume that the inflow volume of the raw water per unit time is Q, the inflow volume of the raw water into each anoxic tank 10 is Q/4, the treated water with a total permeate volume of Q is drawn from each membrane separator 30, and the activated sludge in the volume of 3Q in the most downstream aerobic tank 20 (20d) is returned to the most upstream anoxic tank 10 (10a) via the sludge return path, then the effective circulation ratio of the sludge will be 3 x 4, providing a high circulation ratio of 12Q and a high nitrogen removal rate.

The organic wastewater treatment apparatus 1 includes multiple measuring instruments, including a flow meter for measuring the inflow volume of the organic wastewater, a liquid level meter for measuring the liquid level in the tank, pressure sensors for measuring the transmembrane pressure differences of the respective membrane separators, and a measurement device S provided in the treated water tank 37 for measuring the T-N concentration, NO₃-N concentration, and NH₄-N concentration in the treated water. The organic wastewater treatment apparatus 1 further includes a control unit 60 as a controller for controlling operations of the organic wastewater treatment apparatus 1 based on measurements from these measuring instruments. The control unit 60 is configured as a control panel with a computer including arithmetic circuitry, input circuitry, output circuitry, etc.

While monitoring the degree of raw water inflow, the water level in the biological treatment tank 2, the values of the respective pressure sensors Pm, the T-N concentration (total nitrogen concentration) from the measurement device S provided in the treated water tank 37, and other measurements from these measuring instruments, the control unit 60 repeatedly operates each membrane separator 30 in two operation modes: a filtration operation state and a filtration pause state.

The filtration operation state refers to the state in which the permeate water is drawn from the water collecting pipe 31c as the treated water while aeration is provided by the aerator 32. The filtration pause state refers to the state in which, with the valves of the header pipes 34 closed or the suction pump P stopped, aeration is provided by the aerator 32 to clean the surface of the separation membrane 3 1b by the upward flow generated by air bubbles. The filtration pause state may also be called a relaxation operation state. The control unit 60 repeats the filtration operation for a first predetermined duration (e.g., 9 minutes) and the relaxation operation for a second predetermined duration (e.g., 1 minute).

In this organic wastewater treatment apparatus 1, the actual residence time of the water to be treated in the anoxic tank 10 is reduced to a quarter of that in a typical MBR, so that it is necessary to reduce the DO value in the aerobic tank 20 in order to maintain good denitrification treatment in the anoxic tank 10. The increase in the DO value is noticeable particularly when the load of the organic wastewater, or the water to be treated, is low.

Hence, the control unit 60 is configured to supply air selectively either to the air release pipes 5 or to the aerators 32 via a switching mechanism during a filtration pause of the membrane separators 30, based on values of a DO sensor Sdo installed in each aerobic tank 20. In this embodiment, in response to the DO value exceeding 1.5 mg/L, the control unit 60 switches the switching mechanism to cause air to be supplied to the air release pipes 5 during a filtration pause of the membrane separators 30, and in response to the DO value falling below 0.8 mg/L, the control unit 60 switches the switching mechanism to cause the aerators 32 to provide aeration during a filtration pause of the membrane separators 30. In other words, the appropriate range of the DO values is set from 0.8 mg/L to 1.5 mg/L.

The valves V1, V2 ... and the valves Va, Vb ... described above are controlled by the control unit 60 to open and close reciprocally; when the valves V1, V2 ... are controlled to open, the valves Va, Vb ... are controlled to close, and when the valves Va, Vb ... are controlled to open, the valves V1, V2 ... are controlled to close.

In other words, the valves V1, V2 ... and the valves Va, Vb... constitute a switching mechanism to switch between supplying air to the aerators 32 for the respective membrane separators 30 or to the respective air release pipes 5. The switching mechanism may be configured as a three-way valve configured to switch between directing the airflow from the main blow pipe Tm to the respective aerators 32 or to the respective air release pipes 5.

In any configuration, air is blown from the main blow pipe Tm to other lines of +organic wastewater treatment apparatuses. So if the discharge pressure for introducing the air to the respective air release pipes 5 is lower than that for introducing the air to the respective aerators 32, the volume of airflow to other lines of organic wastewater treatment apparatuses may decrease. Thus, the discharge pressure of the air release pipe 5 needs to be adjusted to be equivalent to that of the aerator 32.

For this purpose, a restriction mechanism is provided to each air release pipe 5, or a constant flow valve is interposed to provide a constant flow rate even under pressure fluctuations, so that the discharge pressure of the air release pipe 5 is equivalent to that of the aerator 32.

In the aerobic tank 20, the air release pipe 5 needs to be located upstream in the organic wastewater flow, at the inlet of the sludge return path, or at a position spaced apart from the outflow port 21, which effectively serves as the sludge return path. This is to avoid the air released from the air release pipe 5 from being returned to the anoxic tank 10 via, among others, the sludge return path.

When switching from supplying air to the aerators 32 to supplying air to the air release pipes 5 via the switching mechanism during the relaxation operation of the membrane separators 30, the control unit 60 may simultaneously control the auxiliary air diffusers 40 to stop air diffusion.

In response to the aerobic tank 20 exceeding the proper range of DO values, the control unit 60 switches from supplying air to the aerators 32 to supplying air to the air release pipes 5 in synchronization for the membrane separators 30 in all aerobic tanks 20 constituting the organic wastewater treatment apparatus 1 for each cycle of the relaxation operation, and in response to the aerobic tank 20 falling within the proper range of DO values, the control unit 60 switches from supplying air to the air release pipes 5 to supplying air to the aerators 32 in synchronization for the membrane separators 30 in all aerobic tanks 20 constituting the organic wastewater treatment apparatus 1 for each cycle of the relaxation operation.

The criterion for "the aerobic tank 20 exceeding the proper range of DO values" may be an average of the DO values of the water to be treated in several aerobic tanks 20 or the DO values of the water to be treated in all aerobic tanks 20. However, it is preferred to use the DO value of the water to be treated in any one of the aerobic tanks 20. The criterion for "the aerobic tank 20 falling within the proper range of DO values" may be an average of the DO values of the water to be treated in several aerobic tanks 20 or the DO values of the water to be treated in all aerobic tanks 20. However, it is preferred to use the DO value of the water to be treated in any one of the aerobic tanks 20. Hereinafter, the expression "DO value of the water to be treated in the aerobic tank 20" is also simply phrased as the "DO value of the aerobic tank 20".

As described above, the method for operating an organic wastewater treatment apparatus includes, in response to the DO value of the aerobic tank 20 exceeding a predetermined threshold, switching from supplying air to the aerators 32 to supplying air to the air release pipes 5 via the switching mechanism during a filtration pause of the membrane separators 30. It goes without saying that the air supply to the air release pipes 5 is switched to the air supply to the aerators 32 via the switching mechanism during a membrane filtration operation.

Another embodiment is now described below.

In the above embodiment, the organic wastewater treatment apparatus 1 includes the biological treatment tank 2, in which each pair of the anoxic tank 10 and the aerobic tank 20 forms a biological treatment unit, and the four pairs of biological treatment units are arranged in series and endlessly along the flow of the organic wastewater. However, the biological treatment units may comprise at least two or more pairs.

### [Second Embodiment]

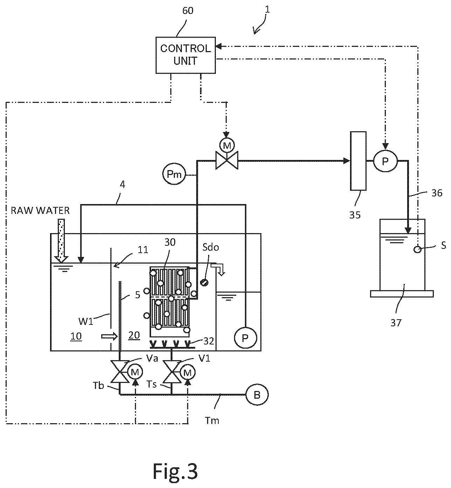

FIG 3 illustrates a second embodiment of the organic wastewater treatment apparatus and the method for operating an organic wastewater treatment apparatus. The same functional blocks as in the first embodiment are identified by the same reference numerals. The organic wastewater treatment apparatus 1 includes a biological treatment tank 2, which consists of an anoxic tank 10 and an aerobic tank 20 having a membrane separator 30 immersed in activated sludge therein, and a sludge return path 4 for returning activated sludge from the aerobic tank 20 to the anoxic tank 10.

A main blow pipe Tm is connected to a blower B, and a first sub-blow pipe Ts is branched off of the main blow pipe Tm. An aerator 32 is connected to the first sub-blow pipe Ts. The first sub-blow pipe Ts is provided with a valve V1 for flow rate regulation corresponding to the membrane separator 30 installed in the aerobic tank 20, allowing for control of the aeration volume and the stopping and starting of the aeration.

A third sub-blow pipe Tb is branched off of the main blow pipe Tm, and an air release pipe 5 installed in the aerobic tank 20 is connected to the third sub-blow pipe Tb. The third sub-blow pipe Tb is provided with a valve Va for flow rate regulation, allowing for control of the stopping and starting of air release.

The valves V1 and Va constitute a switching mechanism to switch between supplying air to the aerator 32 for the membrane separator 30 or to the air release pipe 5. As with the first embodiment, the switching mechanism may be configured as a three-way valve to switch between directing the airflow from the main blow pipe Tm to the aerator 32 or to the air release pipe 5.

As with the first embodiment, the membrane separator 30 is controlled by the control unit 60 to repeat filtration operations and filtration pauses. Increasing the volume of sludge returned via the sludge return path 4 leads to a reduced actual residence time in the anoxic tank, resulting in the need to reduce the DO value in the aerobic tank 20.

Hence, the control unit 60 is configured to supply air selectively either to the air release pipe 5 or to the aerator 32 via the switching mechanism during a filtration pause of the membrane separator 30, based on the value of a DO sensor Sdo installed in the aerobic tank 20. Based on the DO value of the aerobic tank 20, the control unit 60 is configured to supply air selectively either to the air release pipe 5 or to the aerator 32 via the switching mechanism during a filtration pause of the membrane separator 30.

In this embodiment, too, in response to the DO value exceeding 1.5 mg/L, the control unit 60 switches to supplying air to the air release pipe 5 during a filtration pause of the membrane separator 30, and in response to the DO value falling below 0.8 mg/L, the control unit 60 switches to causing the aerator 32 to provide aeration during a filtration pause of the membrane separator 30. In other words, the present invention can also be applied to configurations where the organic wastewater treatment apparatus 1 is composed of a single anoxic tank 10 and a single aerobic tank 20 with a sludge return path for returning activated sludge from the aerobic tank 20 to the anoxic tank 10.

The present invention can also be applied to a cleaning airflow control system as disclosed in Patent Literature 2.

That is, the present invention may be incorporated into a cleaning airflow control system including: a representative basin pressure gauge installed in a representative basin into which air is supplied at a rated airflow rate, the representative basin pressure gauge being configured to measure a transmembrane pressure difference of a representative basin separation membrane unit configured to filter water to be treated flowing into the representative basin; a target value setting unit installed in a controlled basin into which air is supplied at a predetermined airflow rate less than the rated airflow rate, the target value setting unit being configured to set a target value of a transmembrane pressure difference or a membrane filtration resistance of the controlled basin based on an upper limit of a transmembrane pressure difference or a membrane filtration resistance of a controlled basin separation membrane unit configured to filter water to be treated similar to the water to be treated flowing into the representative basin and on information about changes over time of a membrane filtration resistance, calculated based on the transmembrane pressure difference of the representative basin separation membrane unit, or of the transmembrane pressure difference of the representative basin separation membrane unit; an airflow control unit configured to control airflow supplied to the controlled basin based on the target value, such that when the DO value is within the proper range, the airflow supplied to the controlled basin is controlled based on the cleaning airflow control system, and air is released from the air release pipe 5 only when the DO value exceeds the proper range.

It will be appreciated that the above-described embodiments are only examples of the present invention. The above descriptions are not limiting the present invention, and specific configurations of the elements may be varied as suited, as long as such variations provide the functions and effects of the present invention as well.

### Reference Signs List

1: Organic wastewater treatment apparatus
2: Biological treatment tank
3: Raw water supply path
4: Sludge return path
5: Air release pipe
10: Anoxic tank
11: Cutout
20: Aerobic tank
21: Outflow port (sludge return path)
30: Membrane separator
32: Aerator
40: Auxiliary air diffuser
60: Control unit (controller)

## Claims

1. An organic wastewater treatment apparatus for biologically treating nitrogen-containing organic wastewater in activated sludge, comprising:
a biological treatment tank at least including an anoxic tank and an aerobic tank, the aerobic tank having a membrane separator immersed in activated sludge therein, the membrane separator being configured to repeat a filtration operation and a filtration pause;
a sludge return path configured to return activated sludge from the aerobic tank to the anoxic tank;
an air release pipe provided to the aerobic tank; and
a switching mechanism configured to switch between supplying air to an aerator provided to the membrane separator and supplying air to the air release pipe, wherein
the apparatus is configured to, based on a DO value of the aerobic tank, supply air selectively either to the air release pipe or to the aerator via the switching mechanism during a filtration pause of the membrane separator.

2. The organic wastewater treatment apparatus according to claim 1, wherein the air release pipe is located upstream of a flow of the organic wastewater or at a position spaced apart from the sludge return path.

3. The organic wastewater treatment apparatus according to claim 1, wherein a discharge pressure of the air release pipe is adjusted to be equivalent to a discharge pressure of the aerator.

4. The organic wastewater treatment apparatus according to claim 1, wherein
the biological treatment tank includes a plurality of biological treatment units connected in series, each of the biological treatment units including a pair of the anoxic tank and the aerobic tank,
the sludge return path is configured to return activated sludge from the aerobic tank located most downstream to the anoxic tank located most upstream,
the organic wastewater treatment apparatus is configured to divide and supply the organic wastewater between the anoxic tanks of the respective biological treatment units and repeat denitrification treatment in the anoxic tanks and nitrification treatment in the aerobic tanks to biologically treat the organic wastewater, and
the organic wastewater treatment apparatus is configured to, based on a DO value of one of the aerobic tanks, supply air selectively either to the air release pipe or to the aerator via a switching mechanism provided to a membrane separator provided to the one aerobic tank during a filtration pause of the membrane separator.

5. A method for operating the organic wastewater treatment apparatus of any one of claims 1 to 4, comprising:
in response to a DO value of the aerobic tank exceeding a predetermined threshold, switching from supplying air to the aerator to supplying air to the air release pipe via the switching mechanism during a filtration pause of the membrane separator.
